# EUROPÄISCHE PATENTANMELDUNG

(11) **EP 3 333 573 A1**
(43) Veröffentlichungstag der Anmeldung: **13.06.2018**
(21) Anmeldenummer: 17205897.6
(22) Anmeldetag: 07.12.2017
(51) Int. Cl.: G01N 29/04, G01N 29/07

(54) **VERFAHREN UND VORRICHTUNG ZUM ERMITTELN VON DEFEKTEN IN EINEM LANGGESTRECKTEN KÖRPER SOWIE VERWENDUNG VON REFLEKTIERTEN SIGNALEN BEI DER ERMITTLUNG VON DEFEKTEN**

(30) Priorität: 09.12.2016 DE 102016014630
(71) Anmelder: VDEh-Betriebsforschungsinstitut GmbH, 40237 Düsseldorf (DE)
(72) Erfinder: OBERHOFF, Dietmar, 42799 Leichlingen (DE); FLOHR, Guido, 50354 Hürth (DE)
(74) Vertreter: Tilmann, Max Wilhelm

(57) **Zusammenfassung**

Die Erfindung betrifft ein Verfahren zum Ermitteln von Defekten in einem langgestreckten Körper, wobei ein Schallsignal in den Körper von einem Sender eingeleitet und ein in dem Körper reflektiertes Signal von einem Empfänger ermittelt wird, wobei ein Schallsignal an unterschiedlichen Orten in den Körper eingeleitet wird und die jeweiligen reflektierten Signale ermittelt werden.

## Beschreibung

Die Erfindung betrifft ein Verfahren und eine Vorrichtung zum Ermitteln von Defekten in einem langgestreckten Körper sowie eine Verwendung von reflektierten Signalen bei der Ermittlung von Defekten.

Es sind Verfahren und Vorrichtungen zur Prüfung von langgestreckten Körpern bekannt, mit denen eine zerstörungsfreie Ermittlung von Defekten, wie beispielsweise Rissen, Korrosionsstellen, Lunker usw. möglich ist. Dabei kann eine zweidimensional geführte Schallwelle eingesetzt werden, deren Ausbreitung in Längsrichtung des langgestreckten Körpers erfolgt. Defekte werden mittels der Erfassung eines reflektierten Schallsignals ermittelt, wobei die Empfindlichkeit bei verwendeten Verfahren und Vorrichtungen dazu führen kann, dass unerwünschte Reflektionen im Signal erfasst werden. Die eigentlich als unerwünscht anzusehenden Reflektionen können beispielsweise durch das rückwärtige Ende des langgestreckten Körpers hervorgerufen werden. Weitere unerwünschte Reflektionen können durch Kontakt des langgestreckten Körpers mit Führungs- oder Richtrollen bzw. einer Auflage mittels des auf den langgestreckten Körper ausgeübten Drucks erzeugt werden. Diese unerwünschten Reflektionen können den nutzbaren Prüfbereich verkleinern.

Zudem wird das Signal-/Rauschverhältnis bei der Prüfung physikalisch durch das sogenannte kohärente Rauschen begrenzt. Dieses Rauschen entsteht bei der Einzelprüfung durch die zufällige konstruktive Überlagerung kleiner Reflektionen. Bei empfindlicher Prüftechnik können diese Reflektionen zum Beispiel durch die Oberflächenrauigkeit, kleine Stahlverunreinigungen oder die Kornstruktur hervorgerufen werden. Die zufällige konstruktive Überlagerung ist abhängig von dem Schalllaufweg (der Phasenlage der Ultraschallsignale zu den Reflektoren) und den Abständen der Reflektoren zueinander.

Durch ein begrenztes geringes Signal-/Rauschverhältnis ist die aus der Prüfung ermittelte Aussage mit Fehlern belastet, wobei die aus der Prüfung ermittelte Aussage bei kleinen Reflektionen durch den Rauschpegel begrenzt ist.

Aufgabe der vorliegenden Erfindung ist es daher, ein Verfahren und eine Vorrichtung zum Ermitteln von Defekten in einem langgestreckten Körper zu schaffen, bei dem die Prüfempfindlichkeit möglichst weit gesteigert wird und/oder das erhaltene Signal der Prüfung möglichst einfach interpretiert werden kann.

Die Aufgabe wird gemäß den Gegenständen der nebengeordneten Ansprüche gelöst. Vorteilhafte Ausführungsformen der vorliegenden Erfindung sind Gegenstand der jeweiligen abhängigen Patentansprüche und ergeben sich aus der nachfolgenden Beschreibung.

Kerngedanke der Erfindung ist es, nacheinander mehrere Schallsignale an unterschiedlichen Orten in den Körper einzuleiten und die jeweiligen reflektierten Signale zu ermitteln. Es wurde nämlich erkannt, dass bei einer Bewegung des langgestreckten Körpers relativ zu einem vorrichtungsseitigen Kontaktpunkt, beispielsweise einer Auflage, bei einem Vergleich der reflektierten Signale zueinander
- der in dem jeweiligen Signal feststellbare Laufzeitunterschied zwischen zwei erkennbaren Signaländerungen, die durch Unstetigkeiten (Endflächen, Absätze, Risse, Korrosionsstellen, Lunker oder dergleichen) oder Dichteänderungen in dem zu prüfenden Körper hervorgerufen werden und die von dem jeweiligen Ort der Einleitung des Schallsignals in eine Ausbreitungsrichtung liegen, konstant bleibt,
- während sich der in dem jeweiligen Signal feststellbare Laufzeitunterschied zwischen einer erkennbaren Signaländerung, die durch Unstetigkeiten (Endflächen, Absätze, Risse, Korrosionsstellen, Lunker oder dergleichen) oder Dichteänderungen in dem zu prüfenden Körper hervorgerufen werden und die von dem jeweiligen Ort der Einleitung des Schallsignals in eine Ausbreitungsrichtung liegen, und einer Signaländerungen, die durch den Kontakt des zu untersuchenden Körpers mit einem Teil der Vorrichtung oder die durch Unstetigkeiten (Endflächen, Absätze, Risse, Korrosionsstellen, Lunker oder dergleichen) oder Dichteänderungen in dem zu prüfenden Körper hervorgerufen werden und die das von dem jeweiligen Ort der Einleitung ausgesandte Schallsignals erst nach einer Reflektion erreicht, oder die durch noch nicht abgeklungene Schallsignale eines vorherigen Aussendens von Schallsignalen (eines vorherigen "Ultraschall-Schusses") hervorgerufen werden, von reflektiertem Signal zu reflektiertem Signal unterschiedlich ist.

Dadurch wird es möglich, die Signaländerungen, die durch den Kontakt des zu untersuchenden Körpers mit der Vorrichtung oder die durch Unstetigkeiten (Endflächen, Absätze, Risse, Korrosionsstellen, Lunker oder dergleichen) oder Dichteänderungen in dem zu prüfenden Körper hervorgerufen werden und die das von dem jeweiligen Ort der Einleitung ausgesandte Schallsignals erst nach einer Reflektion erreicht, oder die durch noch nicht abgeklungene Schallsignale eines vorherigen Aussendens von Schallsignalen (eines vorherigen "Ultraschall-Schusse") hervorgerufen werden, oder sogenannte rückwärtige Signale, bei denen es sich um Signale handelt, die beispielsweise aufgrund konstruktiver Beschränkungen von einem Sender erzeugt werden und die in eine andere, meist die entgegengesetzte Richtung des Signals laufen, das der Sender eigentlich erzeugt, festzustellen und bei der Ermittlung von Defekten unberücksichtigt zu lassen.

Wird beispielsweise in einer ersten Position des Körpers relativ zu einem Kontaktpunkt mit einer Vorrichtung durch einen Sender ein erstes Schallsignal in den Körper eingeleitet und das reflektierte Signal von einem Empfänger ermittelt, so enthält das reflektierte Signal, wenn man es über die Zeit aufträgt, zu einem Zeitpunkt eine Signaländerung, die durch den Kontakt des zu untersuchenden Körpers mit der Vorrichtung hervorgerufen wird, und zu einem anderen Zeitpunkt eine Signaländerung, die beispielsweise durch die sich aus dem Ende des Körpers ergebende Unstetigkeit ergibt. Die zwischen dem einen Zeitpunkt und dem anderen Zeitpunkt verstrichene Zeit kann man als Laufzeitunterschied bezeichnen. Wiederholt man diesen Vorgang, wenn sich der Körper in einer zweiten Position relativ zum Kontaktpunkt mit der Vorrichtung befindet, so hat sich - in dem hier gewählten Beispiel - der Abstand zwischen dem Kontaktpunkt und der Endfläche verändert. Das weitere reflektierte Signal, wenn man es über die Zeit aufträgt, enthält somit wiederum zu einem Zeitpunkt eine Signaländerungen, die durch den Kontakt des zu untersuchenden Körpers mit der Vorrichtung hervorgerufen wird, und zu einem anderen Zeitpunkt eine Signaländerung, die - in dem hier gewählten Beispiel - durch die sich aus dem Ende des Körpers ergebende Unstetigkeit ergibt. Der Abstand zwischen dem einen Zeitpunkt und dem anderen Zeitpunkt hat sich jedoch geändert; der Laufzeitunterschied hat sich geändert. Demgegenüber bleibt der Laufzeitunterschied zwischen Signaländerungen, die sich aus Unstetigkeiten oder Dichteänderungen des Körpers ergeben, bei allen reflektierten Signalen gleich. Greift man in einer Auswertung nun die Signaländerungen heraus, deren Laufzeitunterschied über alle reflektierten Signale gleich ist, und unterdrückt die Signaländerungen, deren Laufzeitunterschied zu anderen Signaländerungen sich über alle reflektierten Signale ändert, so kann man ein für die weitergehende Auswertung geeignetes, von sich aus Kontaktpunkten mit der Vorrichtung ergebenden Störsignalen bereinigtes Signal erzeugen.

Die Erfindung schafft ein Verfahren zum Ermitteln von Defekten in einem langgestreckten Körper, wobei ein Schallsignal, insbesondere Schallimpuls, Schallwelle oder Schallwellenpaket, in den Körper von einem Sender eingeleitet und ein in dem Körper reflektiertes Signal von einem Empfänger ermittelt wird.

Der Begriff "Defekt" im Sinne der Erfindung umfasst insbesondere Risse, Korrosionsstellen, Lunker oder andere sprungartige Geometrieänderungen oder Dichteänderungen in dem Körper.

Der Begriff "langgestreckter Körper" umfasst im Sinne der Erfindung insbesondere einen Stab, einen Draht oder Profile, wie beispielsweise I-Profile oder T-Profile.

Der Begriff "Schallsignal" im Sinne der Erfindung umfasst insbesondere eine Ultraschallwelle, die geführt ist, beispielsweise eine 2D-Mode-Welle. Insbesondere bevorzugt wird keine freie Welle eingesetzt. Insbesondere bevorzugt werden Stabmoden eingesetzt, da diese sich am einfachsten mit der EMAT-Technik (EMAT= Electromagnetic Acoustic Transducer) erzeugen lassen. Da die EMAT-Technik berührungslos arbeitet, ist sie auch bei hohen Transportgeschwindigkeiten einsetzbar. Insbesondere kann eine Schallbündelausrichtung verwendet werden, mit der eine gerichtete Abstrahlung von Ultraschallimpulsen einer Sonde und ein gerichteter Empfang mit einer Sonde möglich ist, wobei mit einem Phased Array genannten Gruppenstrahler eine Richtungsbeeinflussung und/oder die Generierung unterschiedlicher Wellenlängen möglich ist. Das Schallsignal kann insbesondere zweidimensional geführt sein.

Der Begriff "Signal" bzw. "reflektiertes Signal" umfasst insbesondere den Verlauf einer Signalamplitude über eine Messzeit. Dabei umfasst der Begriff sowohl die analoge Variante, beispielsweise eines durchgängig dargestellten Verlaufs als auch die digitale Variante, bei der für eine Abfolge von diskreten Zeitpunkten eine Wertfolge der dem jeweiligen diskreten Zeitpunkt zugeordneten Signalamplitude dargestellt wird.

Erfindungsgemäß können der Sender und der Empfänger als zwei getrennte Einheiten vorliegen. Insbesondere ist dabei auch eine Bewegung des langgestreckten Körpers zu einem der beiden Einheiten, d.h. Sender und/oder Empfänger möglich. Es ist auch möglich, dass der Sender und ein Empfänger als eine Einheit gehandhabt werden können, die sich insbesondere relativ zum langgestreckten Körper bewegen kann. Die Einheit aus Sender und Empfänger kann ein Prüfkopf sein, wobei sich der langgestreckte Körper durch den Prüfkopf bewegen kann.

Bevorzugt wird zwischen dem aufeinanderfolgenden Einleiten eines ersten und eines zweiten Schallsignals eine Zeit gewartet, die ausreicht, dass ein reflektiertes Signal des ersten Schallsignals abgeklungen ist, damit die Signale der einzelnen reflektierten Signale von unterschiedlichen Schallsignalen, die in den Körper eingeleitet werden, sich nicht überlagern. Die Wiederholungsrate hängt dabei von der Dämpfung der Schallwelle in dem Stab oder Draht ab. Bei starker Dämpfung ist eine höhere Wiederholrate möglich, als bei schwacher Dämpfung. Beispielsweise können Schallsignale mit einer Wiederholungsrate von 30 Hz in den langgestreckten Körper eingeleitet werden. Hierdurch ist es möglich, dass zwar die reflektierten Signale zweier aufeinanderfolgender eingeleiteter Schallsignale sich nicht überlagern bzw. nicht im Wesentlichen überlagern, aber dennoch eine genügend hohe Wiederholungsrate gewählt ist, mit der ein effektives Arbeiten möglich ist.

Bevorzugt wird der Körper relativ zum Sender und/oder Empfänger bewegt. Hierdurch ist es möglich, dass ein einfaches Verfahren durchgeführt wird, bei dem beispielsweise Sender und/oder Empfänger ortsfest installiert sind und der Körper entlang Sender und/oder Empfänger bewegt wird, wobei die Bewegungsrichtung insbesondere in Richtung der Längsrichtung des Körpers erfolgt. Insbesondere bevorzugt bewegt sich das erste und das zweite Schallsignal innerhalb des langgestreckten Körpers gleichläufig oder gegenläufig zur Bewegungsrichtung des Körpers.

Die Größe der Relativgeschwindigkeit hängt auch von der möglichen Wiederholrate und der gewünschten Auflösung ab. Beispielsweise kann eine relative Bewegung zwischen Körper und Sender und/oder Empfänger mit einer Geschwindigkeit von 1 m/s durchgeführt werden. Es sind aber auch Geschwindigkeiten von 10m/s oder 100m/s denkbar.

Bevorzugt werden die Signale digitalisiert, wodurch eine für die Prozessierung bzw. Handhabung der reflektierten Signale vereinfachte Voraussetzung geschaffen werden kann. Mit den digitalisierten Signalen können Berechnungen vereinfacht werden.

Bevorzugt werden die reflektierten Signale an einer Referenz ausgerichtet. Die Referenz ist insbesondere eine in dem jeweiligen Signal klar erkennbare Signaländerung, beispielsweise die Signaländerung, die sich durch die Reflektion des Schallsignals am Ende des Körpers ergibt. Das Echo vom Stabende hat in der Regel die größte Amplitude, so dass es sich einfach aus dem Signalverlauf erkennen lässt. Als "Ausrichten" an einer Referenz wird dabei verstanden, dass die reflektierten Signale bezüglich ihrer Darstellung des Verlaufs der Signalamplitude zur Messzeit so verändert werden, dass der Messzeitpunkt für die Referenz bei allen reflektierten Signalen in der gleichen Lage dargestellt wird.

Insbesondere bevorzugt erfolgt das Ausrichten der reflektierten Signale nach einer Digitalisierung der reflektierten Signale. Dadurch entsteht für jedes Signal eine zweispaltige Tabelle, in deren einen Spalte die Werte der jeweiligen Signalamplitude wiedergegeben werden und in deren anderen Spalte die jeweils zugehörigen Messzeitpunkte wiedergegeben werden. Die Tabellen können dann zu einer Matrix vereint werden, wobei die Zeilen der Tabellen so aufeinander abgestimmt werden, dass in einer Zeile die die Referenz repräsentierenden Signalamplituden wiedergegeben werden. Anstelle der spaltenweisen Darstellung ist natürlich auch die transponierte Darstellung, nämlich die zeilenweise Darstellung denkbar, bei der dann die Spalten der Tabellen so aufeinander abgestimmt werden, dass in einer Spalte die die Referenz repräsentierenden Signalamplituden wiedergegeben werden.

Bevorzugt wird für jede Position relativ zur Referenz der Medianwert der Signalamplituden der an der Referenz ausgerichteten, Signale an dieser Position bestimmt. Hierdurch werden die Signale miteinander verglichen und in Beziehung zueinander gesetzt. Der Medianwert bietet eine einfache Möglichkeit, die erhaltenen Signale zueinander in Beziehung zu setzen. Ein Medianwert kann einfach bestimmt werden, wobei die Güte der Bestimmung hinsichtlich der Ermittlung von Defekten nicht leiden muss. Alternativ ist es auch denkbar, den Mittelwert zu bilden. Dabei bietet das Bilden des Medianwerts den Vorteil, dass in einzelnen Signalen vorhandene Ausreißer, beispielweise große Signalabweichung, wie sie beispielsweise durch ein Kontaktecho entstehen, eliminiert werden. Werden die reflektierten Signale, wie zuvor beschrieben, in einer bevorzugten Ausführungsform als Matrix dargestellt, so wird bei spaltenweiser Darstellung für jede Zeile bzw. bei zeilenweiser Darstellung der die Signale repräsentierenden Tabellen für jede Spalte der Matrix der Medianwert bzw. der Mittelwert gebildet.

Diese Ausführungsform macht sich den Gedanken zu Nutze, dass bei einer Mittelwertbildung, vor allem aber bei einer Medianwertbildung über einen Datensatz Ausreißer entweder gänzlich unberücksichtigt bleiben (Medianwertbildung) oder (bei hinreichend großem Datensatz) keinen wesentlichen Einfluss auf den Mittelwert mehr haben. Bildlich gesprochen sieht die Erfindung es vor, die reflektierten Signale so übereinander anzuordnen, so dass die Signaländerungen, die in jedem reflektierten Signal den gleichen Laufzeitunterschied zueinander haben, unmittelbar übereinander liegen. Dieses Ausrichten der reflektierten Signale führt dazu, dass die Signaländerungen, die von reflektiertem Signal zu reflektiertem Signal keinen konstanten Laufzeitunterschied zu einem der vorgenannten Signaländerungen haben, bei jedem Signal an einem anderen Ort liegen. Führt man nach einer solchen Anordnung der Signale eine Mittelwertbildung oder eine Medianwertbildung über die Werte der Signale an einem Ort entlang des Signals durch, so werden die einzelnen Ausreißer, die nach der Ausrichtung der Signale von Signal zu Signal an einem unterschiedlichen Ort liegen, durch die Mittelwertbildung, bzw. Medianwertbildung herausgerechnet.

Für die Mittelwertbildung ist es notwendig, dass mindestens ein erstes Schallsignal und ein zweites Schallsignal in den Körper eingeleitet werden, um dann die beiden reflektierten Signale in der vorbeschriebenen Weise untersuchen zu können. Für eine Medianwertbildung ist es notwendig, dass neben dem ersten Schallsignal und dem zweiten Schallsignal noch ein drittes Schallsignal an einem Ort in den Körper eingeleitet wird, der sich von dem Ort der Einleitung des ersten Schallsignals und dem Ort der Einleitung des zweiten Schallsignals unterscheidet. Die Güte des Ergebnisses des erfindungsgemäßen Verfahrens steigt mit der Anzahl der Signale, so dass in einer bevorzugten Ausführungsform an einer Vielzahl von unterschiedlichen Orten Schallsignale in den langgestreckten Körper eingeleitet und deren reflektierte Signale ermittelt werden. Es sind beispielsweise für die auszusendenden US-Schüsse Wiederholraten von mehr als 1 Hz bevorzugt, insbesondere bevorzugt mehr als 5 Hz, insbesondere bevorzugt mehr als 10 Hz, beispielsweise von 30Hz.

Bevorzugt wird eine Signalfilterung, eine Signaltransformation und/oder eine Signaldemodulation durchgeführt, wodurch die Güte der einzelnen erhaltenen Signale verbessert werden kann. Nach der Medianwertbildung bzw. der Mittelwertbildung können die Signale nochmals weiterverarbeitet werden.

Die Erfindung schafft auch eine Vorrichtung zur Ermittlung von Defekten in einem langgestreckten Körper. Ein Sender für ein Schallsignal, welches in den langgestreckten Körper eingeleitet werden kann, und ein Empfänger für ein im Körper reflektiertes Signal sind vorgesehen. Ferner ist eine Positionierungsvorrichtung für eine Durchführung einer relativen Bewegung zwischen Körper und Sender und/oder Empfänger vorhanden. Hierdurch können Schallsignale an unterschiedlichen Orten des Körpers in diesen eingekoppelt werden. Die im Körper reflektierten Signale können ermittelt werden und miteinander verglichen werden. Hierdurch können unerwünschte Reflektionen, die keinem realen Defekt zuzuordnen sind, erkannt werden.

Der Begriff "Positionierungsvorrichtung" umfasst ein Halte- und/oder Bewegungsmittel zum Bewegen des langgestreckten Körpers. Das Halte- und/oder Bewegungsmittel kann ein Fixiermittel aufweisen, das den langgestreckten Körper in Bezug auf ein Antriebsmittel fixiert und mittels des Antriebsmittels eine insbesondere translatorische Bewegung des langgestreckten Körpers in Längsrichtung des langgestreckten Körpers durchführen kann.

Die Referenz kann die sich aus der Reflektion des Schallsignals an einem definierten Punkt des Körpers, insbesondere bevorzugt des Endes des langgestreckten Körpers ergebende Signaländerung in dem reflektieren Signal sein. Als definierte Punkte können auch Absätze oder bewusst an Referenzpunkten in den Körper eingebrachte Kerben oder andere Geometrieänderungen sein. Bei einem Draht liegt in der Regel kein Echo eines Endes des Drahtes vor, so dass bei der Ermittlung von Defekten in einem als Draht ausgestalteten langgestreckten Körper eine externe Referenz verwendet werden muss, welches beispielsweise ein externes Taktsignal sein kann. Beispielsweise kann eine exakte Messung der Verschiebung des Drahtes zwischen 2 Ultraschall-Schüssen vorgenommen und diese als Längentaktsignal verwendet werden. Bei festem Längentaktsignal (z.B. alle 10 cm) kann bei der Detektion eines großen künstlichen Fehlers im Draht die Verschiebung der Abtastpunkte zwischen 2 Ultraschall-Signalen ermittelt werden, ohne dass die Schallgeschwindigkeit bzw. die Abtastfrequenz bekannt sein muss.

Als Auswertungseinheit kann ein PC verwendet werden. Ein PC eignet sich insbesondere bei geringen Wiederholraten der Einleitung des Schallsignals, beispielsweise bis zu 100Hz, wie sie beispielsweise bei der Ermittlung von Defekten von Stäben verwendet werden. Bei hohen Wiederholraten für die Einleitung des in den langgestreckten Körper eingeleiteten Schallsignals, wie sie bei der Ermittlung von Defekten in einem Draht verwendet werden, kann ein Schaltkreis, insbesondere ein Field Programmable Gate Array (FPGA) verwendet werden, in den eine logische Schaltung programmiert werden kann, welches beispielsweise die logische und funktionelle Beschreibung der Architektur bzw. Funktion enthält, ohne dass Datenverluste auch bei der hohen Wiederholrate auftreten. Die einfache Datenprozessierung ermöglicht die schnelle Prozessierung und die Verringerung der Prüfempfindlichkeit bis annähernd zu den physikalischen möglichen Limits. Es ist auch denkbar, die Signalaufbereitung auf mehrere Bauteile der Vorrichtung zu verteilen, beispielsweise eine erste Signalaufbereitung bereits im FPGA vorzunehmen und dann eine weitere Signalaufbereitung oder Auswertung an einem PC. Beispielsweise kann die Echtzeit-Verarbeitung bis nach der Berechnung der Mediawerte, bzw. Mittelwerte im FPGA erfolgen, während eine reduzierte Signalanzahl (beispielsweise die Reduktion auf 1 statt z.B. 100 Signale) dann im PC erfolgen kann. Aber auch die komplette Verarbeitung im FPGA ist möglich. Als Sender und/oder Empfänger ist auch der Einsatz eines Piezo-Wandlers denkbar.

Die mediangefilterten Signale können weiterverarbeitet werden. Beispielsweise können bei einer Ermittlung von Defekten an einem Stab als langgestreckten Körper die HF-Ultraschallsignale der beiden Stabhälften ortsrichtig zusammengefügt werden. Bei der Ermittlung von Defekten an einem Draht kann ein HF-Ultraschallsignal gebildet werden, das ortsrichtig die Echos im gesamten Draht darstellt. Anschließend an die vorgenannte Weiterverarbeitung der mediangefilterten Signale können die folgenden Signalverarbeitungsschritte durchgeführt werden: Filterung des Signals, beispielsweise mit Matched Filtern, Bildung einer Signal einhüllenden (z.B. Quadraturdemodulation oder Hilbert-Transformation und Tiefpassfilterung und/oder Detektion von Ort bzw. Laufzeit und Amplitude von Defekten, beispielsweise mittels einer Verwendung von Schwellenwerten.

Die Erfindung schafft auch eine Verwendung von reflektierten Signalen bei der Ermittlung von Defekten in einem langgestreckten Körper, wobei die reflektierten Signale dadurch erzeugt wurden, dass ein erstes Schallsignal in den Körper von einem Sender eingeleitet und ein in dem Körper erstes reflektiertes Signal von einem Empfänger ermittelt wird und ein zweites Schallsignal in den Körper von dem Sender eingeleitet und ein in dem Körper zweites reflektiertes Signal von dem Empfänger ermittelt wird, dadurch gekennzeichnet, dass das erste Schallsignal an einem unterschiedlichen Orten in den Körper eingeleitet wird als das zweite Schallsignal und die jeweiligen reflektierten Signale ermittelt werden.

Das Schallsignal sollte an unterschiedlichen Orten in den Körper eingeleitet werden und die jeweiligen reflektierten Signale ermittelt werden. Die einzelnen reflektierten Signale können digitalisiert werden.

Die Erfindung wird anhand eines in den Zeichnungen dargestellten Ausführungsbeispiels näher erläutert.

In den Zeichnungen zeigt:
- Fig. 1: eine Schemazeichnung einer Vorrichtung;
- Fig. 2: digitalisierte und gespeicherte (Ultraschall-)Signale;
- Fig. 3: zeilenweise ausgerichtete (Ultraschall-)Signale von Fig. 2;
- Fig. 4: eine Signalverarbeitung nach Berechnung eines Medians der Signale von Fig. 3; und
- Fig. 5: Signalverarbeitung mittels Verwendung eines eingekoppelten Impulses mit einer Verschiebung zwischen aufeinanderfolgenden Signalen.

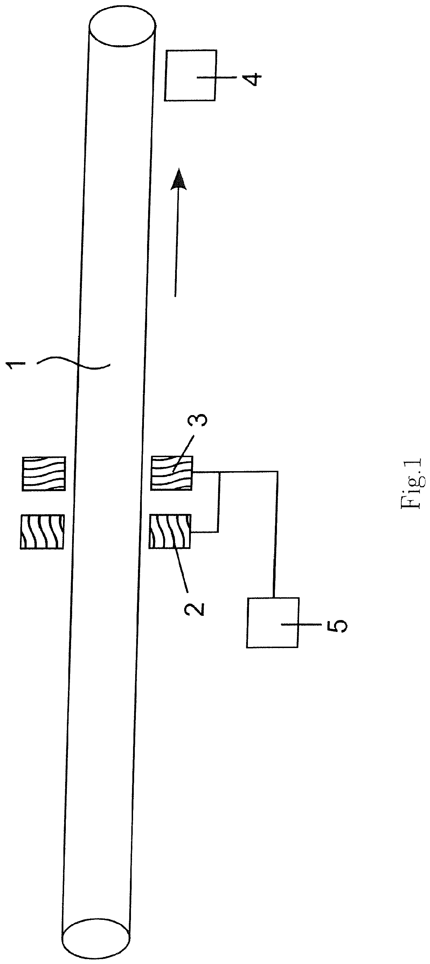

Fig. 1 zeigt eine Schemazeichnung einer erfindungsgemäßen Vorrichtung zur Ermittlung zu Defekten in einem langgestreckten Körper 1, der als Stab vorliegt. Der langgestreckte Körper 1 kann durch einen Prüfkopf bewegt werden, der einen Sender 2 für ein Schallsignal, welches in den langgestreckten Körper 1 eingeleitet werden kann, und einen Empfänger 3 zur Ermittlung eines im Körper reflektierten Signals Sₙ aufweist. Ferner ist eine Positionierungsvorrichtung 4 für eine Durchführung einer relativen Bewegung zwischen dem langgestreckten Körper 1 und dem Sender 2 und dem Empfänger 3 vorhanden. Die Positionierungsvorrichtung 4 kann als Auflage für den langgestreckten Körper 1 ausgestaltet sein.

Der Sender 2 kann das Schallsignal, welches insbesondere als Ultraschallwelle ausgestaltet ist, die zweidimensional geführt ist, in den langgestreckten Körper 1 einleiten. Die Ausbreitungsrichtung des eingeleiteten Schallsignals ist dabei im in Fig. 1 dargestellten Ausführungsbeispiel in Längsrichtung des langgestreckten Körpers 1 ausgerichtet.

Der Empfänger 3 ist mit einer Auswertungseinheit 5, die als PC und/oder FPGA ausgestaltet sein kann, funktionell gekoppelt, insbesondere verkabelt. Das reflektierte Signal Sₙ kann von der Auswertungseinheit 5 als Amplitude in Abhängigkeit von der Laufzeit erfasst werden. Die Auswertungseinheit 5 kann die reflektierten Signale Sₙ insbesondere digitalisieren und speichern.

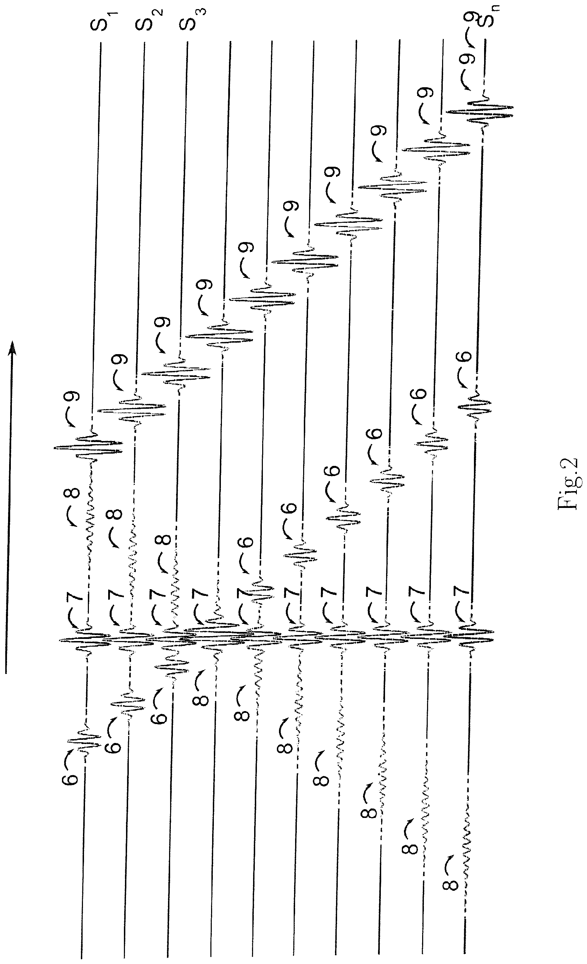

Fig. 2 zeigt schematisch digitalisierte und gespeicherte Signale, während der langgestreckte Körper 1 durch den Prüfkopf mit Sender 2 und Empfänger 3 bewegt wird. Mit vorgegebener Wiederholrate werden von dem Sender 2 Ultraschallsignale in den langgestreckten Körper 1 eingeleitet und die reflektierten Signale vom Empfänger 3 empfangen. Die von dem Empfänger 3 empfangenen Signale Sₙ werden digitalisiert und gespeichert. Die Wiederholrate wird hierbei so gewählt, dass die Reflektionen des vorhergehenden Signals im Wesentlichen vollständig abgeklungen sind. Es wird beispielsweise eine Wiederholrate von ca. 30 Hz verwendet. Die Prüfrichtung wird so gesteuert, dass sie jeweils in Richtung des weiter entfernten Stabendes gesendet und empfangen wird. Hierdurch ergeben sich zum Beispiel für eine Stablänge von 3 m und einer Vorschubgeschwindigkeit von 1 m/s mehr als ca. 30 Ultraschallsignale für jeweils eine Prüfrichtung, wobei die Umschaltung der Prüfrichtung Zeit benötigt und die Prüfung erst beginnen bzw. enden kann, wenn sich das Stabende vollständig im Prüfkopf befindet.

Den Signalen Sₙ der Fig. 2 ist jeweils eine Signaländerung 6 eines Defekts, eine Signaländerung 7 hervorgerufen von einer Auflage, eine Signaländerung 8 des rückwärtigen Endes des langestreckten Körpers 1 und eine Signaländerung 9 des vorwärts gerichteten Endes des langgestreckten Körpers 1 zu entnehmen. Während die Signaländerungen 6, 8, 9 eine unterschiedliche Position entlang der als X-Achse aufgetragenen Messzeit aufweisen, verbleibt die Signaländerung 7 der Auflage stets an der gleichen Position im Zeitsignal entlang der X-Achse. Die Laufzeit der Signaländerung 7 der Auflage weist im Wesentlichen die gleiche Laufzeit für alle Signale Sₙ bei dem sich bewegendem langgestreckten Körper 1 auf. Das ergibt sich daraus, dass die Lage der Auflage relativ zum Sender 2 und Empfänger 3 gleichbleibt, während sich die Lage der am Körper befindlichen, Signaländerungen auslösenden Unstetigkeiten relativ zum Sender 2 und Empfänger 3 bewegt.

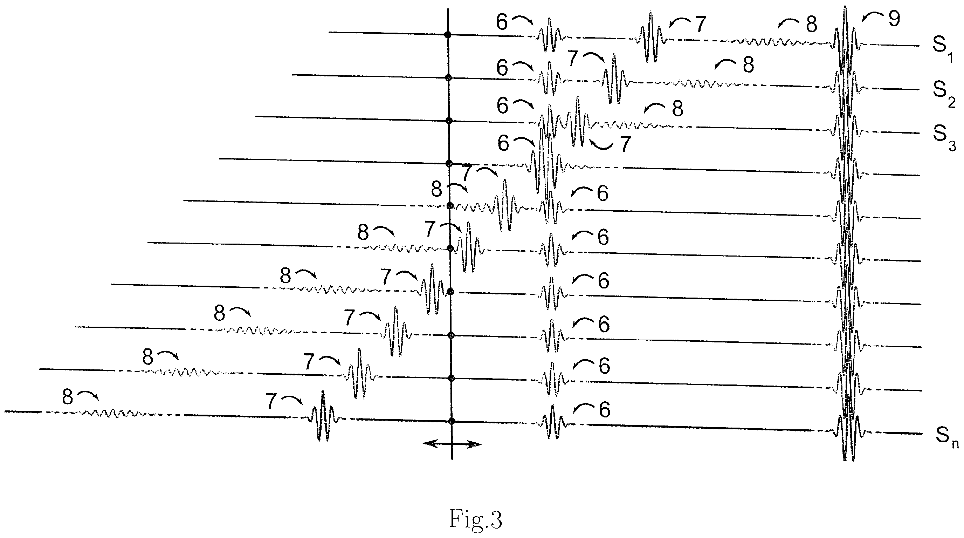

Für jede Prüfrichtung werden die Signale Sₙ dann zeilenweise so ausgerichtet, dass sich die als Referenz verwendete Signaländerung 9 vom Ende des langgestreckten Körpers 1 an der gleichen Position befindet, welches in Fig. 3 gezeigt ist. Zur Positionsdetektion wird zum Beispiel die Verschiebung über das Maximum der Signaleinhüllenden (Hilbert-Transformation) berechnet, um Phasenverschiebungen, die durch Dispersion der Stabmoden entstehen können, zu berücksichtigen.

Durch die Ausrichtung bzw. Verschiebung der gespeicherten Signale Sₙ befinden sich gleiche Längenkoordinaten der Signale des langgestreckten Körpers 1 übereinander. Die unerwünschten Reflektionen (aus der Rückrichtung und von Transportrollen bzw. Auflagen) kommen jedoch nicht übereinander zu liegen.

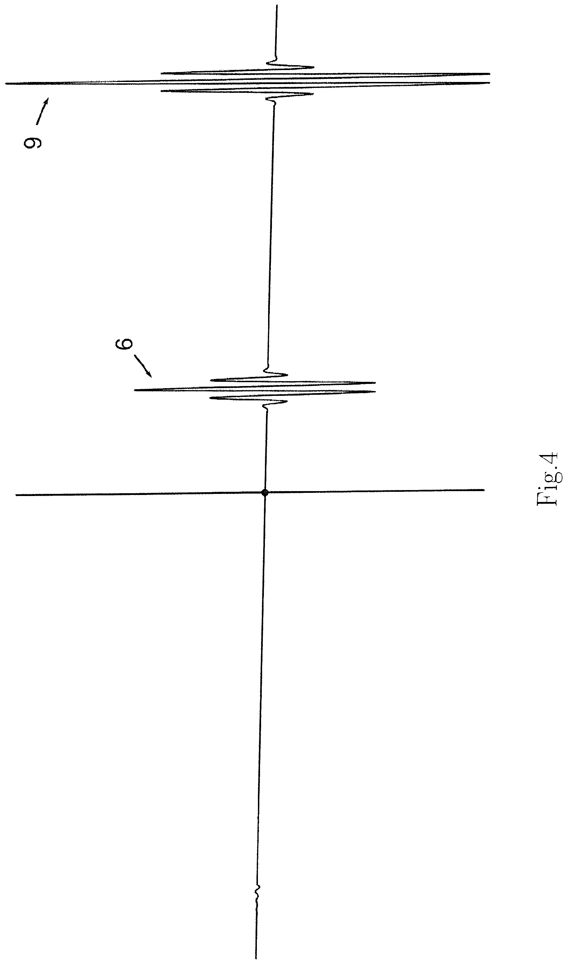

Wird nun aus der in Fig. 3 gezeigten Anordnung der reflektierten Signale spaltenweise der Medianwert der Signalamplituden gebildet, so kann das in Fig. 4 gezeigte Signal erzeugt werden. Durch die spaltenweise Medianwertsbildung werden die jeweils in unterschiedlichen Spalten auftretenden Signaländerungen 7 der Auflage und des Signals aus der Rückrichtung eliminiert.

Durch die in den Spaltenvektor möglicherweise vorhandenen großen Amplituden der unerwünschten Reflektionen kann sich eine Asymmetrie in der Wahrscheinlichkeitsverteilung der Amplituden (eine Schiefe) ergeben. Der Ort dieser Echos bzw. Impulse (Echo vom rückwertigen Ende des langgestreckten Körpers 1 bzw. Echos von Auflagen bzw. von Auflagen herrührender Reflektion) können bei bekannter Schallgeschwindigkeit und Prüfgeometrie berechnet werden. Hierdurch ist es möglich, diese Signalbereiche nicht bei der Berechnung des Medianwertes zu berücksichtigen und hierdurch die Asymmetrie in der Wahrscheinlichkeitsverteilung der Amplituden zu vermeiden. Da für die Berechnung die Hochfrequenz-Ultraschallsignale verwendet werden können, ergibt sich näherungsweise eine symmetrische Verteilung der Abtastwerte um den wahren Wert, wobei der Medianwert in der Nähe des wahren Wertes liegt. Da sich in den abgetasteten Signalen Sₙ das kohärente Rauschen bei geringer Verschiebung des langgestreckten Körpers 1 zufällig verändert, ergibt sich bei Verwendung des Medianwertes eine Verbesserung des Signal/Rausch-Verhältnisses (Ortsmittelung). Das in den Einzelsignalen vorhandene elektrische Rauschen ist zufällig in jedem Signal Sₙ verteilt und wird durch die Medianfilterung verkleinert.

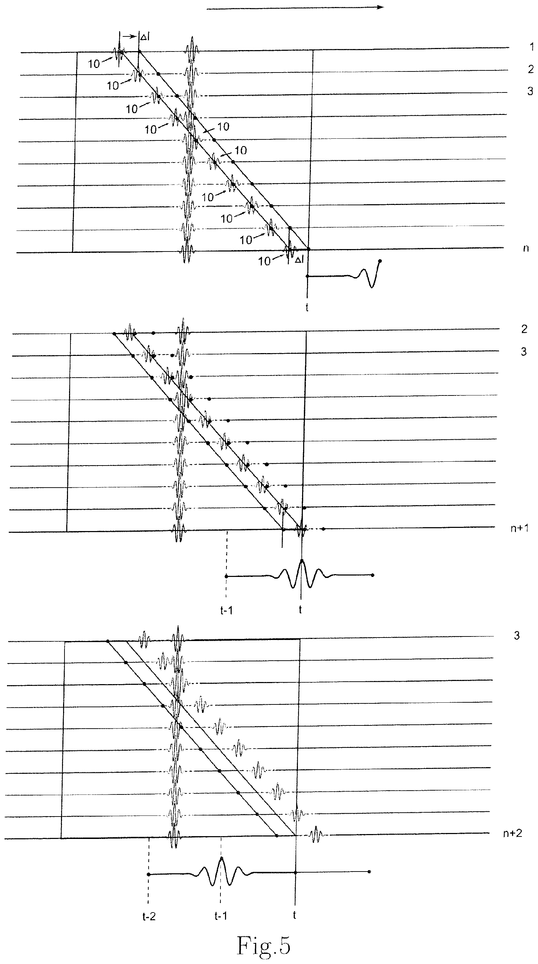

Sofern bei dem betrachteten langgestreckten Körper 1 ein Referenzecho (10) wie das des Endes des langgestreckten Körpers 1 nicht vorhanden ist, kann man durch ein externes Längentaktsignal, zum Beispiel von einem Encoder, die Verschiebung zwischen zwei digitalisierten Signalen berechnen. Hierzu muss die Länge des Längentaktes, die Schallgeschwindigkeit und die Signalabtastfrequenz bekannt sein. Um eine exakte Verschiebung der aufeinanderfolgenden Signale zu bestimmen, kann man alternativ zum Beispiel auch große künstliche Defekte in einen Draht einbringen und dann analog, wie für das Beispiel des Stabes aus Fig. 1 beschrieben, die Verschiebung im Signal zwischen zwei Längentakten berechnen. In diesem Fall müssen weder die Länge des Längentaktes, die Schallgeschwindigkeit und auch nicht die Signalabtastfrequenz bekannt sein. Die zeilenweise Verschiebung zwischen den aufeinanderfolgenden Signalen kann dann in der weiteren Signalverarbeitung berücksichtigt werden, wie das beispielsweise in Fig. 5 gezeigt ist. Ebenso ist es denkbar, anstelle einer spaltenweisen Medianfilterung nach einem Ausrichten der Signale, eine "schrägverlaufende Medianfilterung" vorzunehmen, nämlich den Medianwert über die in der Matrix entlang einer Schrägen angeordneten Amplitudenwerte vorzunehmen (gilt für Draht und Stab).

## Patentansprüche

1. Verfahren zum Ermitteln von Defekten in einem sich entlang einer Längsachse erstreckenden, langgestreckten Körper (1), wobei ein erstes Schallsignal in den Körper von einem Sender (2) eingeleitet und ein in dem Körper (1) erstes reflektiertes Signal (S₁) von einem Empfänger ermittelt wird und ein zweites Schallsignal in den Körper von dem Sender (2) eingeleitet und ein in dem Körper (1) zweites reflektiertes Signal (S₂) von dem Empfänger ermittelt wird, **dadurch gekennzeichnet, dass** das erste Schallsignal an einem unterschiedlichen Ort in den Körper (1) eingeleitet wird als das zweite Schallsignal und die jeweiligen reflektierten Signale ermittelt werden.

2. Verfahren nach Anspruch 1, **dadurch gekennzeichnet, dass** zwischen dem aufeinanderfolgenden Einleiten des ersten und des zweiten Schallsignals eine Zeit gewartet wird, die ausreicht, dass ein reflektiertes Signal (S₁) des ersten Schallsignals abgeklungen ist.

3. Verfahren nach Anspruch 1 oder 2, **dadurch gekennzeichnet, dass** sich das erste und das zweite Schallsignal im Wesentlichen in Richtung der Längsachse des langgestreckten Körpers durch den langgestreckten Körper bewegt.

4. Verfahren nach einem der Ansprüche 1 bis 3, **dadurch gekennzeichnet, dass** das erste Schallsignal und das zweite Schallsignal die gleiche Signalform haben.

5. Verfahren nach einem der Ansprüche 1 bis 4, **dadurch gekennzeichnet, dass** der Körper (1) relativ zum Sender (2) und/oder Empfänger (3) bewegt wird.

6. Verfahren nach einem der Ansprüche 1 bis 5, **dadurch gekennzeichnet, dass** die reflektierten Signale (Sₙ) digitalisiert werden.

7. Verfahren nach einem der Ansprüche 1 bis 6, **dadurch gekennzeichnet, dass** die reflektierten Signale (Sₙ) an einer Referenz ausgerichtet werden.

8. Verfahren nach Anspruch 7, **dadurch gekennzeichnet, dass** für jede Position relativ zur Referenz der Medianwert der Signalamplituden der an der Referenz ausgerichteten reflektierten Signale (Sₙ) an dieser Position bestimmt wird.

9. Verfahren nach einem der Ansprüche 1 bis 8, **dadurch gekennzeichnet, dass** eine Signalfilterung, Signaltransformation und/oder Signaldemodulation durchgeführt wird.

10. Vorrichtung zur Ermittlung von Defekten in einem langgestreckten Körper (1), wobei ein Sender (2) für das Senden von Schallsignalen und ein Empfänger (3) für das Empfangen von im Körper (1) reflektierten Signalen (Sₙ) vorgesehen sind, **dadurch gekennzeichnet, dass** eine Positionierungsvorrichtung (4) für eine Durchführung einer relativen Bewegung zwischen Körper (1) und Sender (2) und/oder Empfänger (3) vorhanden ist.

11. Verwendung von reflektierten Signalen bei der Ermittlung von Defekten in einem langgestreckten Körper (1), wobei die reflektierten Signale dadurch erzeugt wurden, dass ein erstes Schallsignal in den Körper von einem Sender (2) eingeleitet und ein in dem Körper (1) erstes reflektiertes Signal (S₁) von einem Empfänger ermittelt wird und ein zweites Schallsignal in den Körper von dem Sender (2) eingeleitet und ein in dem Körper (1) zweites reflektiertes Signal (S₂) von dem Empfänger ermittelt wird, **dadurch gekennzeichnet, dass** das erste Schallsignal an einem unterschiedlichen Ort in den Körper (1) eingeleitet wird als das zweite Schallsignal und die jeweiligen reflektierten Signale ermittelt werden.
